# FASCICULE DE BREVET EUROPEEN

(11) **EP 3 654 615 B1**
(45) Date de publication et mention de la délivrance du brevet: **24.06.2026**
(21) Numéro de dépôt: 19209539.6
(22) Date de dépôt: 15.11.2019
(51) Int. Cl.: H04L 9/40, H04L 9/32, H04L 9/00

(54) **PLATEFORME DÉCENTRALISÉE DE GESTION DE SECRETS PERFECTIONNÉE**
VERBESSERTE DEZENTRALISIERTE PLATTFORM ZUR VERWALTUNG VON GEHEIMHALTUNGSINFORMATIONEN
DECENTRALISED PLATFORM FOR IMPROVED PRIVACY MANAGEMENT

(30) Priorité: 15.11.2018 FR 1860546
(43) Date de publication de la demande: 20.05.2020
(73) Titulaire: BULL SAS, 78340 Les Clayes-sous-Bois (FR)
(72) Inventeur: DOMINGOS, Thomas, 69100 VILLEURBANNE map.png (FR); HEBERT, Guillaume, 69003 Lyon (FR); LEPORINI, David, 94150 Rungis (FR)
(74) Mandataire: IPAZ

(56) Documents cités:
- WO-A1-2018/154489
- CN-A- 107 682 331
- US-A1- 2017 011 460
- US-A1- 2018 060 496

## Description

L'invention concerne le domaine de l'internet des objets (IoT), et plus particulièrement une plateforme de gestion de secrets.

Le développement de plus en plus important de l'internet des objets (IoT) nécessite de répondre à la sécurisation des objets connectés. Une estimation du marché donne le chiffre de 30 milliards comme nombre d'objets connectés à l'IoT d'ici 2020, il est donc important de proposer des solutions pour sécuriser l'IoT tant au niveau scalabilité pour répondre aux besoins des nombreux objets connectés, mais également aux aspects de sécurité pour se prémunir des cyberattaques.

Les besoins de sécurité associés aux communications des objets (confidentialité, intégrité, authentification, non répudiation) sont couverts par l'utilisation de jeux de clés, définissant une identité, et de mécanismes cryptographiques. La gestion des clés se réalise par le biais d'une plateforme appelée un gestionnaire de clé. Grâce à ce gestionnaire de clé, un objet est autorisé à émettre sur un réseau lorsqu'il est reconnu par le gestionnaire de clé. Le gestionnaire de clé est aussi capable d'émettre des messages chiffrés pour assurer la confidentialité des données émises. Par ailleurs, l'objet est également capable de déchiffrer les données reçues.

Dans le secteur de l'IoT, différents acteurs ayant un rôle dans le cycle de vie d'utilisation d'un objet connecté forment un ensemble, comme par exemple, un fabricant, un client, un opérateur, et un serveur d'application. Enfin, un gestionnaire de clé (ou en anglais Key Server) assure la sécurité de l'ensemble.

Le fabricant est nécessaire pour fabriquer les objets et les personnaliser d'un point de vue cryptographique.

Le client achète les objets au fabricant puis les enregistrent sur un réseau auprès d'un opérateur pour qu'ils puissent communiquer avec le serveur d'application.

L'opérateur fournit le support réseau pour l'environnement de l'IoT, et autorise ainsi les objets à communiquer via le réseau.

Le serveur d'application utilise les objets qui ont été enregistrés sur le réseau pour remplir les services auxquels ils sont destinés.

Enfin, le gestionnaire de clé (ou tiers de confiance) délivre des clés à tout l'ensemble pour assurer la sécurité de bout en bout et la gestion des identités.

Pour répondre à l'émergence grandissante du marché de l'IoT, de nombreux acteurs sont présents. En effet, on assiste à une segmentation des métiers et à un phénomène de concurrence. Toutefois, tous les acteurs ne souhaitent pas partager certaines informations confidentielles ou secrets entre eux. Pourtant, certaines informations contenues dans ces secrets sont nécessaires à la mise en oeuvre de l'ensemble des fonctionnalités possibles d'un objet. Dans ce contexte, chaque acteur possède un rôle distinct entrainant des problématiques d'approvisionnement et d'accès aux clés. Il existe donc un besoin d'obtenir des éléments dérivés de secrets sans pour autant donner la valeur de ces secrets.

Par exemple, un client peut vouloir acheter un objet auprès de plusieurs fabricants et l'objet peut avoir besoin d'émettre sur le réseau d'un autre opérateur : c'est le cas dans l'itinérance ou autrement appelé le roaming. Par ailleurs, l'objet d'un client peut être cédé à un autre client.

Afin de répondre aux exigences de sécurité, une plateforme de gestion de données, et notamment de secrets, doit, en plus de répondre aux problématiques d'approvisionnement de clés, également répondre à des contraintes de scalabilité, de disponibilité et d'automatisation tout en étant sécuritaire.

Ainsi, un serveur de gestion de secrets possède une contrainte de résilience aux pannes. En effet, la gestion des secrets implique l'impossibilité du côté d'un client de retrouver un secret sans appel au serveur.

Un serveur de gestion de secrets possède également une contrainte de haute disponibilité. En effet, certains services reposent exclusivement sur ce type de serveur pour la gestion des identités, ou des contrôles d'accès. En cas de panne du serveur de gestion de secrets, l'accès à ces services n'est pas garanti.

Enfin, un serveur de gestion de secrets doit faire face à une contrainte de sécurité, ce qui nécessite un besoin d'authentification forte pour les accès à ces secrets.

Il est connu pour ce type de serveur de regrouper un ensemble de technologies différentes agrégées dans des architectures complexes, et notamment des solutions d'équilibrage des charges réseaux permettant la non permissivité des systèmes à des attaques de type déni de service, la réplication des serveurs, et surtout des bases de données qui les accompagnent permettant la résilience en cas d'attaque, ainsi que des solutions d'authentification centralisées, telles que le protocole « *Lightweight Directory Access Protocol* » (LDAP) permettant l'interrogation et la modification des services d'annuaire ou encore la méthode d'authentification unique « *Single Sign-On* » (SSO) permettant à un utilisateur d'accéder à plusieurs applications informatiques (ou sites web sécurisés) en ne procédant qu'à une seule authentification.

Cependant, au sein de ces architectures complexes, l'ensemble des informations liées aux secrets sont uniquement centralisées au sein du serveur de gestion de secrets.

Par ailleurs, afin que les différents acteurs puissent utiliser l'ensemble des fonctionnalités d'un objet, il est connu d'utiliser un protocole de télécommunication, par exemple de type LoRa, qui permet aux objets connectés d'échanger de petits paquets de données auprès d'un acteur donné grâce à une communication de type pair à pair.

Cependant, les solutions existantes ne permettent pas une collaboration ouverte entre les différents acteurs. Le document CN107682331A décrit un procédé d'accès à des ressources utilisant une blockchain et le contrat intelligent générant des jetons.

L'invention a pour but de remédier à ces inconvénients en fournissant une plateforme de gestion de secrets entre au moins deux acteurs ayant chacun une identité propre, comprenant un gestionnaire de secrets, et au moins deux nœuds, ayant chacun une identité propre, chaque nœud gérant la consultation du gestionnaire de secrets par un des acteurs, caractérisée en ce que le gestionnaire de secret comprend un registre de chaine de blocs partagé entre les nœuds.

Ainsi, l'ensemble des informations utiles au fonctionnement de la plateforme sont écrites dans le registre partagé, permettant une automatisation de la solution. Cela permet par ailleurs à l'ensemble des nœuds, c'est-à-dire par exemple à un ordinateur relié au réseau de la chaine de blocs et utilisant un programme relayant les transactions réalisées dans la chaine de blocs, de pouvoir accéder ou de demander l'accès à n'importe quel secret géré par n'importe quel acteur. Le stockage des informations étant décentralisé et répliqué par l'intermédiaire de la chaine de blocs, cela permet d'être résilient aux pannes sur une partie des nœuds qui compose la chaine de blocs, puisque l'accès peut se faire via l'ensemble des points de connexion, c'est-à-dire l'ensemble des nœuds, mis à disposition par la chaine de blocs. Cela permet également de garantir une haute disponibilité du système sans y répondre de manière ferme puisqu'une surcharge locale sur un nœud peut influer sur la disponibilité de celui-ci. Par ailleurs, les acteurs n'interagissent pas de pair à pair mais collaborent tous via une plateforme ouverte.

La plateforme de gestion de secrets selon l'invention peut également comporter les caractéristiques suivantes :
- L'identité des acteurs et des nœuds ont chacun une partie publique stockée dans le registre partagé.

Ainsi, le stockage de ces identités, et notamment de leur partie publique, c'est-à-dire de leur clé publique, permet de créer un système de contrôle d'accès à la chaine de blocs, d'autoriser certaines interactions avec la chaine de blocs et certaines actions sur la chaine de blocs. Cela permet également de mettre en place un référentiel public pour les identités des acteurs et des nœuds.
- Le gestionnaire de secrets comprend un système de permission.

Ainsi, cela permet d'identifier et authentifier fortement un acteur et de définir les droits d'accès aux secrets.
- Le gestionnaire de secrets comprend un système de contrôle d'accès.

Ainsi, cela permet de contrôler l'identité de l'utilisateur de la plateforme de gestion de secrets.
- Le gestionnaire de secrets comprend un mécanisme d'anti-rejeu.

Ainsi, cela permet d'éviter une attaque de la plateforme par usurpation d'identité.
- Le gestionnaire de secrets comprend un gestionnaire de clé.

Ainsi, cela permet une gestion autonome et locale des données. En effet, le gestionnaire de clé, permet notamment d'autoriser un objet à émettre sur un réseau lorsqu'il est reconnu par le gestionnaire de clé. Le gestionnaire de clé permet également d'émettre des messages chiffrés pour assurer la confidentialité des données émises.
- Le gestionnaire de secrets comprend un contrat intelligent.

Ainsi, le contrat intelligent (ou en anglais smart contract) permet d'interroger la chaine de blocs et de lui faire réaliser de façon locale des opérations sur ces données chiffrées, par exemple sur les secrets stockés dans la chaine de blocs. De plus, l'exécution des opérations du contrat intelligent réalisées sur la chaine de blocs sont effectués dans un environnement sécurisé.
- Le contrat intelligent comprend un générateur de clé.

Ainsi, chaque nœud peut générer localement, par exemple une paire de clés, c'est-à-dire une clé publique et une clé privée, grâce au générateur de clé du contrat intelligent de la chaine de blocs.- Le contrat intelligent est adapté à réaliser une dérivation de clé de sorte à créer une clé de session.

Ainsi, cela permet de créer une clé symétrique à usage unique utilisée par exemple pour chiffrer tous les messages dans une session de communication.
- Au moins un des deux acteurs gère au moins un secret ainsi que des droits associés à ce secret.

Ainsi, les informations de droit d'accès et de sécurisation étant stockés de manière sécurisée dans la chaine de blocs, la plateforme est en mesure de délivrer des valeurs de secrets qui sont uniquement déchiffrables et donc connues par les acteurs autorisés.
- Chaque nœud est adapté pour utiliser au moins un secret afin de fournir à un des acteurs un résultat d'au moins une opération impliquant le secret en fonction des droits associés à ce secret.

Ainsi, cela permet d'assurer que les secrets ne soient pas divulgués lors de leur utilisation par les nœuds. Les nœuds remplissent les fonctions qui nécessitent la connaissance du secret sans en dévoiler leur valeur. Ainsi ils remplissent des fonctionnalités identiques et sont interchangeables sauf au niveau de leur identité qui leur est propre. N'importe quel nœud peut remplir n'importe quelle fonction d'un autre nœud, la résilience aux pannes est assurée.
- chaque nœud a accès à un module cryptographique physique.

Ainsi, cela permet que chaque nœud soit en charge du stockage sécurisé de leur clé privée.

L'invention concerne également un procédé de gestion d'un secret réalisé au moyen d'une plateforme de gestion de secrets entre au moins des premier et second acteurs, caractérisé en ce que la gestion du secret est réalisée au moyen de la plateforme de gestion de secrets selon l'invention.

Cela permet de proposer un accès décentralisé au gestionnaire de secret de sorte qu'au moins deux acteurs distinct puissent échanger entre eux des informations contenues dans un secret.

Le procédé de gestion d'un secret selon l'invention peut également comporter les caractéristiques suivantes :
- Le premier acteur est propriétaire du secret, chaque acteur ayant des droits attachés au secret, comprenant les étapes suivantes :
   - accès du second acteur au gestionnaire de secrets ;
   - demande du second acteur de réaliser une opération sur le secret.

Cela permet à un acteur de demander de façon sécurisée à réaliser une opération sur un secret contenu dans le gestionnaire de secret, sous réserve que l'acteur possède les droits nécessaires associés au secret.
- Le procédé comprend en outre au moins une des étapes suivantes :
   - vérification par un contrat intelligent que le second acteur possède les droits nécessaires pour réaliser l'opération sur le secret ;
   - récupération du secret par le contrat intelligent ;
la gestion du secret étant réalisée au moyen de la plateforme de gestion de secrets selon l'invention.

Ainsi, cela permet de contrôler que le premier acteur ait bien donné l'autorisation en associant des droits d'accès au secret relatif aux opérations réalisables et aux acteurs ayant l'autorisation de réaliser ces opérations sur le secret.
- Le procédé comprend en outre au moins une des étapes suivantes :
   - réalisation d'une dérivation de clé de session par le contrat intelligent ;
   - transmission de la clé de session au second acteur par le gestionnaire de secret ;
la gestion du secret étant réalisée au moyen de la plateforme de gestion de secrets selon l'invention.

Ainsi, le second acteur peut bénéficier de l'information contenue dans le secret, sans que le secret ne lui soit directement transmis ou dévoilé.
- Le procédé comprend une étape de chiffrement de la clé de session, avant l'étape de transmission au premier acteur.

Ainsi, cela permet de sécuriser les données transmises, afin d'éviter qu'un tiers ne possédant pas de droits associés au secret, intercepte l'information au cours de l'étape de transmission.
- Le procédé comprend en outre une étape d'authentification du premier acteur.

Ainsi, cela permet de vérifier l'identité de l'acteur réalisant une demande d'opération sur un secret, de sorte à sécuriser l'accès au secret et permettre notamment la vérification par le contrat intelligent que l'acteur possède les droits nécessaires pour réaliser l'opération sur le secret.
- Les droits attachés au secret sont définis par le propriétaire du secret.

Cela permet que le propriétaire du secret puisse lui-même et librement définir les droits attachés au secret dont il est propriétaire, et notamment choisir les opérations réalisables sur le secret et les acteurs pouvant réaliser ces opérations. Ainsi, cela permet au propriétaire du secret de contrôler l'usage de son secret.
- L'opération sur le secret est une opération de chiffrement du secret.

Ainsi, cela permet de chiffrer des informations avec une clé symétrique restant secrète au sein de l'écosystème afin de garantir que les informations ne soient pas dévoilées.

L'invention sera mieux comprise à la lecture de la description qui va suivre, donnée uniquement à titre d'exemple et faite en se référant aux dessins dans lesquels :
- la figure 1 est une représentation schématique de la plateforme de gestion de secrets selon l'invention ;
- la figure 2 représente schématiquement un gestionnaire de secrets autour duquel est représenté un ensemble de nœuds et d'acteurs associés à ces nœuds ;
- la figure 3 est une représentation schématique des différentes interactions des nœuds avec la chaine de blocs du gestionnaire de secrets ;
- la figure 4 est une représentation schématique des interactions entre les nœuds et la chaine de blocs lors de l'enrôlement d'un objet au sein de la chaine de blocs du gestionnaire de secrets ;
- la figure 5 représente schématiquement les interactions entre les nœuds et la chaine de blocs du gestionnaire de secret lors d'un transfert et un partage de propriété entre le fabricant et un client ;
- la figure 6 représente schématiquement les interactions entre les nœuds et la chaine de blocs du gestionnaire de secrets lors de l'enregistrement d'un objet ;
- la figure 7 est une représentation schématique des interactions entre les nœuds et la chaine de blocs du gestionnaire de secrets lors d'une demande de clé de session.

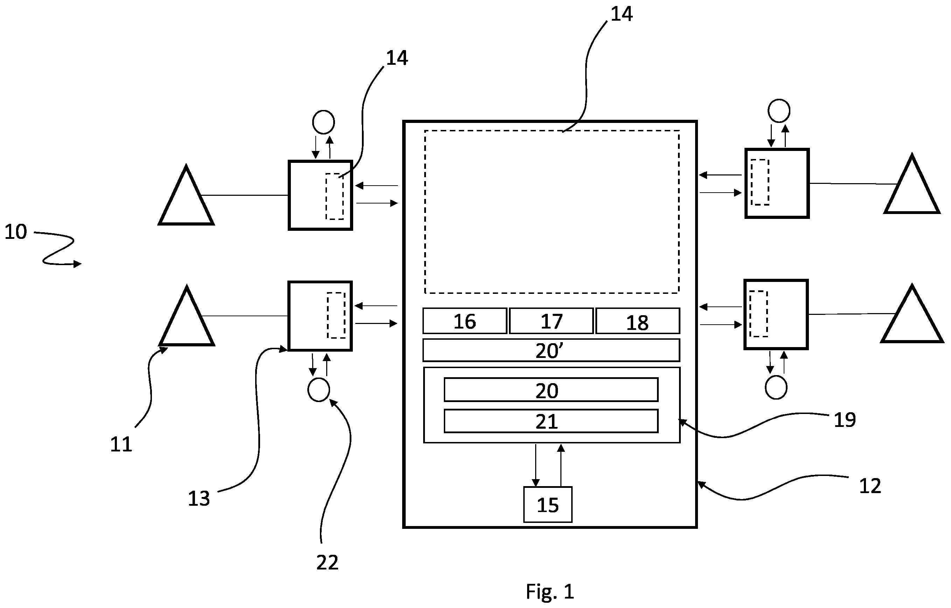

On a représenté sur la figure 1 une plateforme de gestion de secrets 10 selon l'invention.

La plateforme 10 comprend au moins deux acteurs 11 distincts d'un même domaine. Dans l'exemple décrit, la plateforme 10 comprend quatre acteurs 11 provenant du domaine de l'IoT. Chaque acteur 11 possède une identité propre, c'est-à-dire une clé publique et une clé privée formant une paire de clés.

La plateforme 10 comprend en outre un gestionnaire de secrets 12. Dans l'exemple décrit le gestionnaire de secrets 12 comprend une chaine de blocs.

Par ailleurs, la plateforme 10 comprend au moins deux nœuds 13, chacun associé respectivement à un acteur 11. Dans l'exemple décrit, la plateforme comprend quatre nœuds associés respectivement à un acteur 11. Un nœud 13 peut par exemple être un ordinateur ou un serveur.

La chaine de blocs du gestionnaire de secrets 12 comprend un registre 14 partagé avec des nœuds 13. Ainsi, le gestionnaire de secrets 12 comprenant un registre 14 de chaine de blocs, cela permet à un acteur 11 de stocker et gérer un secret 15 dont il est propriétaire, c'est-à-dire une information que l'on souhaite protéger, de façon totalement décentralisée et répliquée. Plus particulièrement, l'acteur 11 peut définir les droits d'accès au secret 15 qu'il stocke dans le gestionnaire de secrets 12. Par exemple, l'acteur 11 peut décider de donner accès qu'à certaines opérations sur son secret 15 et seulement par certains autres acteurs qu'il détermine. Par l'intermédiaire du gestionnaire de secrets 12 comprenant la chaine de blocs, les acteurs 11 d'un domaine n'interagissent pas de pair à pair mais collaborent ensemble via la plateforme 10 qui est ouverte.

Chaque acteur 11 possède également une identité propre, ou plus précisément une identité numérique propre c'est-à-dire une clé publique et une clé privée formant une paire de clés. La partie publique de l'identité de chaque acteur 11, c'est-à-dire la clé publique de chaque acteur 11 est, dans l'exemple décrit, stockée dans le registre partagé 14 de la chaine de blocs.

Chaque nœud 13 possède également une identité propre, ou plus précisément une identité numérique propre c'est-à-dire une clé publique et une clé privée formant une paire de clés. La partie publique de l'identité de chaque nœud 13, c'est-à-dire la clé publique de chaque nœud 13 est, dans l'exemple décrit, stockée dans le registre partagé 14 de la chaine de blocs.

Le registre partagé 14 stocke l'ensemble des informations utiles au fonctionnement de la plateforme 10, par exemple les droits associés à chacun des acteurs 11 ou encore les droits associés à chacun des secrets 15 stockés dans la chaine de blocs du gestionnaire de secrets 12. Ainsi, il est possible d'automatiser certaines opérations sur la plateforme 10 et notamment sur le gestionnaire de secret 12 grâce aux informations stockées dans le registre partagé 14.

En particulier, la clé publique de l'identité propre des acteurs 11 et des nœuds 13 peut être stockée dans le registre partagé 14 de sorte à créer un système de contrôle d'accès à la chaine de blocs du gestionnaire de secrets 12, d'autoriser certaines interactions avec la chaine de blocs du gestionnaire de secrets 12 ou encore certaines opérations sur la chaine de blocs du gestionnaire de secrets 12. Par ailleurs, dans l'exemple décrit, un référentiel public pour les identités des acteurs 11 et des nœuds 13 est mis en place via le registre partagé 14.

L'ensemble des nœuds 13 gèrent notamment la consultation par un acteur 11 du gestionnaire de secrets 12, c'est-à-dire de la chaine de blocs. Les nœuds 13 sont reliés et communiquent avec la chaine de blocs du gestionnaire de secrets 12 par l'intermédiaire d'un réseau et utilisent un programme qui relaie les transactions réalisées dans la chaine de bloc du gestionnaire de secrets 12. Les nœuds 13 permettent d'accéder au gestionnaire de secrets 12 et demander l'accès à n'importe quel secret 15 géré par n'importe quel acteur 11. Le nœud 13 permet de réaliser des actions qui nécessitent la connaissance du secret 15, sans dévoiler le secret 15. L'accès à la chaine de blocs du gestionnaire de secrets 12 peut se réaliser via l'ensemble des nœuds 13 qui sont des points de connexion mis à la disposition par la plateforme 10. Par ailleurs, le gestionnaire de secrets 12 étant décentralisé et le registre 14 étant répliqué sur chacun des nœuds 13, la plateforme de gestion de secrets 10 est résiliente aux pannes sur une partie des nœuds 13. Le gestionnaire de secrets 12 est également hautement disponible, une surcharge d'un nœud 13 n'empêchant pas l'accès au gestionnaire 12 via un autre nœud 13.

Dans l'exemple décrit, la chaine de blocs comprend un système de permission 16 afin d'identifier et authentifier fortement un acteur 11 se connectant au gestionnaire de secrets 12 et contrôler ses droits.

La chaine de blocs du gestionnaire de secrets 12 peut en outre comprendre un système de contrôle d'accès 17 afin de contrôler l'identité d'un utilisateur, par exemple au moyen d'un mot de passe, d'un badge ou d'une signature, de la plateforme de gestion de secrets 10.

La chaine de blocs du gestionnaire de secrets 12 peut également comprendre un système de mécanisme d'anti-rejeu 18 pour sécuriser la plateforme 10 en évitant une attaque du gestionnaire de secrets 12 par usurpation de l'identité d'un acteur 11 ou utilisateur autorisé par un tiers.

Par ailleurs, le gestionnaire de secrets 12 comprend un gestionnaire de clé (20'). Le gestionnaire de clé (20') assure la gestion autonome et locale des données, et notamment des clés au sein de la plateforme (10).

Dans l'exemple décrit, la chaine de blocs du gestionnaire de secrets 12 comprend un contrat intelligent 19. Le contrat intelligent 19 permet à un acteur 11 d'interroger de façon locale la chaine de blocs du gestionnaire de secrets 12 et de réaliser des opérations sur les secrets 15 stockés, même si les secrets sont chiffrés. Les opérations réalisées par le contrat intelligent 19 sont réalisées dans un environnement sécurisé, le contrat intelligent 19 étant hébergé dans la chaine de blocs du gestionnaire de secrets 12.

Le contrat intelligent 19 peut comprendre en outre un générateur de clé 20 qui génère de façon autonome et locale les clés utilisées au sein de la plateforme 10. Chaque nœud 13 peut ainsi, générer, par exemple une paire de clé, au moyen du générateur de clé 20 du gestionnaire de secret 12.

Le contrat intelligent 19 peut également comprendre un module de calcul 21 permettant notamment de réaliser une opération de dérivation de clé de sorte à créer une clé de session. Cette opération de dérivation de clé crée une clé symétrique à usage unique utilisée par exemple pour chiffrer tous les messages ou informations dans une session de communication.

Des opérations peuvent être réalisées sur un secret 15 sans dévoiler le secret 15 à un acteur 11 non propriétaire du secret 15. En effet les informations de droit d'accès et de sécurisation étant stockés de manière sécurisée dans la chaine de blocs 12, la plateforme 10 est en mesure de délivrer des valeurs de secrets 15 qui sont uniquement déchiffrables et donc connues par les acteurs 11 autorisés.

Par ailleurs, ces opérations peuvent être demandées par l'intermédiaire de n'importe quel nœud 13 de la plateforme 10. Ainsi, chaque nœud 13 est adapté pour utiliser au moins un secret 15 afin de fournir à un acteur 11 le résultat d'au moins une opération impliquant le secret 15 en fonction des droits associés à ce secret 15. Le secret 15 n'est donc pas divulgué lors de leur utilisation par les nœuds 13. En effet, les nœuds 13 remplissent les fonctions qui nécessitent la connaissance du secret 15 sans en dévoiler leur valeur. Ainsi les nœuds 13 remplissent des fonctionnalités identiques et sont interchangeables sauf au niveau de leur identité qui leur est propre. N'importe quel nœud 13 peut donc remplir n'importe quelle fonction d'un autre nœud 13, assurant la résilience de la plateforme 10 aux pannes.

Enfin, chaque nœud 13 peut comprendre un accès à un module cryptographique physique 22 afin que chaque nœud soit en charge du stockage sécurisé de leur clé privée.

La plateforme selon l'invention permet de mettre en œuvre un procédé de gestion d'un secret 15 selon l'invention.

Le procédé concerne la gestion d'un secret, au moyen d'une plateforme de gestion de secrets 10 selon l'invention, entre au moins des premier et second acteurs 11, le premier acteur 11 étant propriétaire du secret 15.

Chaque acteur 11 a des droits attachés au secret 15, définis par le premier acteur 11, c'est-à-dire le propriétaire du secret 15.

Le procédé de gestion d'un secret 15 comprend une première étape d'accès du second acteur 11 au gestionnaire de secret 12. Le second acteur 11 demande ensuite au gestionnaire de secrets 12, par l'intermédiaire du nœud 13 auquel le second acteur 11 est associé, de réaliser une opération sur le secret 15.

Le procédé de gestion de secrets peut en outre comprendre une étape de vérification par le contrat intelligent 19 que l'acteur 11 possède les droits nécessaires pour réaliser l'opération sur le secret 15. Dans l'exemple décrit, l'opération sur le secret 15 est une opération de dérivation du secret 15, par exemple une opération de chiffrement du secret 15. Si le second acteur 11 possède les droits nécessaires, le contrat intelligent récupère le secret 15 et réalise une opération de dérivation de clé de session. Enfin, le gestionnaire de secret 12 transmet la clé de session au second acteur 11. Ainsi, le gestionnaire de secret 12 comprenant une chaine de blocs, l'accès au gestionnaire de secret 12 est décentralisé, et chaque acteur 11 peut demander à réaliser une opération sur un secret 15 contenu dans le gestionnaire de secret 12, sous réserve que l'acteur 11 possède les droits nécessaires associés au secret 15. Ainsi, un acteur 11 bénéficie de l'information contenue dans le secret 15, sans que le secret 15 ne lui soit directement transmis ou dévoilé.

Le procédé de gestion de secrets peut en outre comprendre une étape d'authentification du second acteur 11 pour vérifier l'identité de cet acteur 11 réalisant une demande d'opération sur un secret 15, de sorte à sécuriser l'accès au secret 15 et permettre la vérification par le contrat intelligent 19 que l'acteur 11 possède les droits nécessaires pour réaliser l'opération sur le secret 15.

Dans l'exemple décrit, le procédé de gestion de secret comprend une étape de chiffrement de la clé de session, avant l'étape de transmission au second acteur 11 afin de sécuriser les données transmises, et d'éviter qu'un tiers ne possédant pas de droits associés au secret 15, intercepte l'information au cours de l'étape de transmission.

On décrira ci-après un exemple de réalisation du procédé selon l'invention mettant en œuvre la plateforme de gestion de secrets 10 selon l'invention.

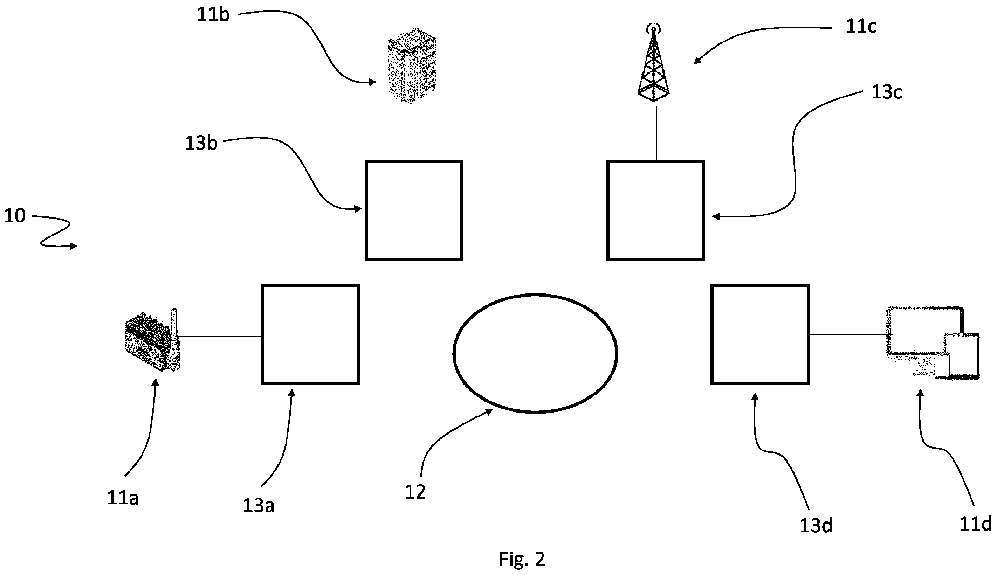

La figure 2 représente un ensemble de nœuds 13 et un gestionnaire de gestion de secrets 12 de la plateforme 10 selon l'invention. Chaque nœud 13 est associé à un acteur 11, par exemple du domaine de l'IoT. Dans l'exemple décrit, quatre nœuds 13 sont représentés associés à quatre acteurs 11, et notamment un nœud 13a associé à un fabricant 11a, un nœud 13b associé à un client 11b, un nœud 13c associé à un opérateur 11c et un nœud 13d associé à un serveur d'application 11d.

Chaque nœud 13 est associé à un acteur 11 différent remplissant chacun des rôles différents de sorte à couvrir les besoins d'un domaine donné, et plus particulièrement dans l'exemple décrit, le domaine de l'IoT.

En effet, le fabricant 11a fournit des objets contenant chacun une clé (ou clé de device) qui permet de sécuriser ses échanges, par exemple lorsque l'objet communique sur un réseau.

Le client 11b a besoin d'objets connectés afin de répondre à ses besoins. Le client 11b a alors besoin de se fournir auprès du fabricant 11a pour acquérir, soit par achat, soit par location, des objets connectés. Le client 11b doit alors se charger de l'enrôlement de ces objets connectés chez l'opérateur 11c et le serveur d'applications 11d. Ces opérations sont nécessaires pour que les objets acquis soient autorisés et aient la possibilité d'émettre sur le réseau tout en étant correctement reconnus par le serveur d'application 11d.

L'opérateur 11c fournit l'accès à un réseau et vérifie que les objets soient bien autorisés à émettre sur leur réseau.

Le serveur d'applications 11d fournit différents types de services sous réserve de droits d'accès.

Dans le cadre des réseaux dans le domaine de l'IoT, l'identité de l'objet, c'est-à-dire une clé unique utilisée par l'objet dans le cas d'une clé symétrique, n'est pas fournie directement au serveur d'application 11d ni aux opérateurs 11c par le fabricant 11a. Ceux-ci ont chacun accès à une clé dérivée de la clé de l'objet.

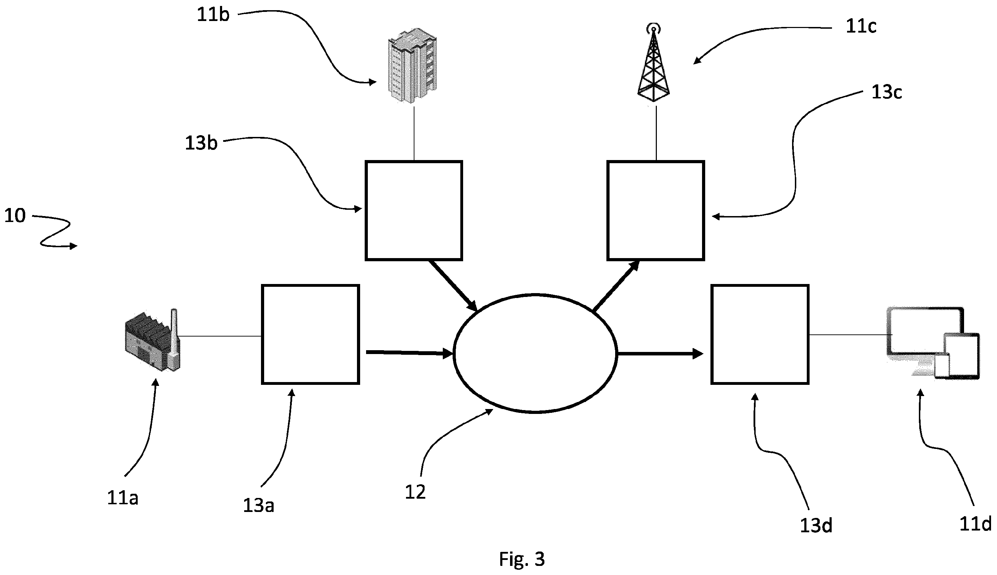

Comme représenté sur la figure 3, chaque acteur 11 peut se connecter à n'importe quel nœud 13 sous réserve d'avoir été enregistré sur la chaine de blocs du gestionnaire de secrets 12. A chaque action sur le gestionnaire de secrets 12, l'acteur 11 doit ainsi s'authentifier. Les identités des acteurs 11 et des nœuds 13 sont très importante car elles permettent d'identifier les rôles de chacun, de garantir les accès aux informations, et notamment aux secrets 15 et prouvent les droits associés à chaque objet, par rapport à chaque acteur 11 ou chaque nœud 13.

Le nœud associé au fabricant 11a est en charge de l'enrôlement des objets que le fabricant 11a fabrique. Ainsi, le nœud 13a associé au fabricant 11a inscrit dans la chaine de blocs du gestionnaire de secrets 12, et notamment dans le registre partagé 14, la clé qui est utilisée par l'objet, c'est-à-dire une clé symétrique appelée clé de l'objet. En effet, l'usage d'une clé asymétrique n'est pas adapté à un objet connecté dans le domaine de l'IoT, ces objets connectés ne possédant généralement pas de capacité suffisante pour réaliser des opérations de cryptographie asymétrique.

Le fabricant 11a génère autant de clés publiques qu'il y a de nœuds 13 dans la chaine de blocs du gestionnaire de secrets 12. Chaque génération de clé est réalisée à partir d'un générateur qui dépend d'un index aléatoire et d'une clé publique associée à un nœud 13. Ces clés forment ainsi les clés de séquestre qui vont servir par exemple à chiffrer la clé de l'objet.

Le fabricant 11a chiffre la clé de l'objet avec chacune des clés de séquestre précédemment générée.

Le fabricant 11a inscrit une transaction d'enrôlement qui est indexée par un identifiant de l'objet, dans la chaine de blocs du gestionnaire de secrets 12 qui contient différentes informations, comme par exemple l'identifiant et la version de l'objet, l'identifiant de la gestion des droits d'accès associés à cet objet, le chiffrement de la clé de l'objet. Dans le droit d'accès figure notamment l'identifiant du fabricant 11 qui a inscrit la transaction dans la chaine de blocs.

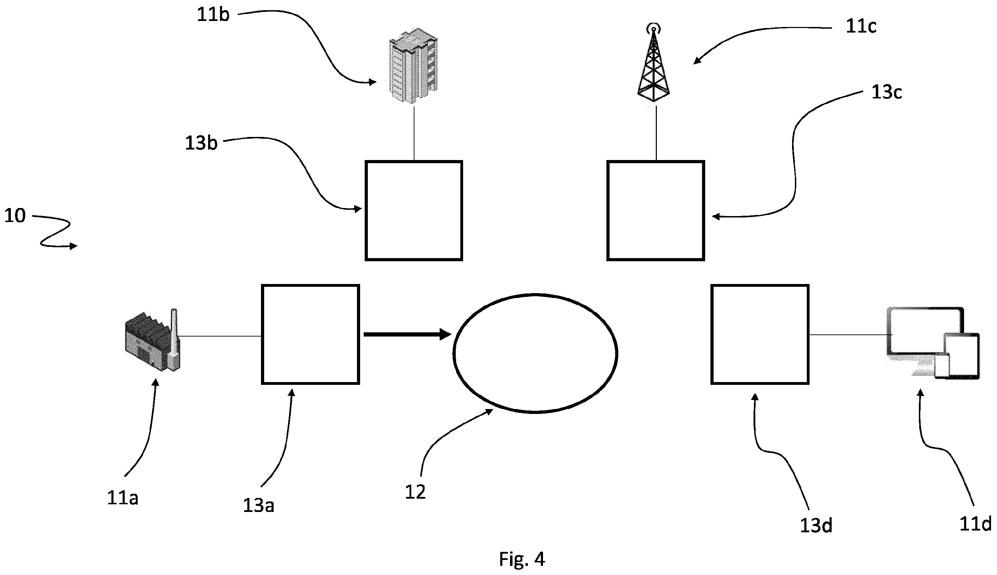

Dans un premier temps, seul le fabricant 11a est en mesure de retrouver la clé de l'objet qui est stockée sur la chaine de blocs du gestionnaire de secrets 12 puisque lui seul est référencé dans les identités qui ont un droit d'accès à cette donnée, comme représenté sur la figure 4. De même, après avoir accès à la donnée, lui seul connait sa clé privée associée, étant donné qu'il possède le générateur et sa clé privée, qui est nécessaire pour déchiffrer la clé de l'objet.

Il est à noter que les nœuds 13 ont également accès au secret 15 et que les autres acteurs 11 issus du fabricant 11a n'ont pas les mêmes droits que le fabricant lui-même. En effet, le nœud 13a associé au fabricant 11a et les autres acteurs jouent un rôle différent. En particulier, dans le cas des clés de l'objet, le nœud 13a associé au fabricant 11a est en mesure de retrouver la clé de l'objet et de l'utiliser, alors qu'un autre acteur 11 qui a le droit d'accès à la clé n'a en réalité que le droit de faire exécuter à un nœud 13 des opérations qui nécessitent cette clé.

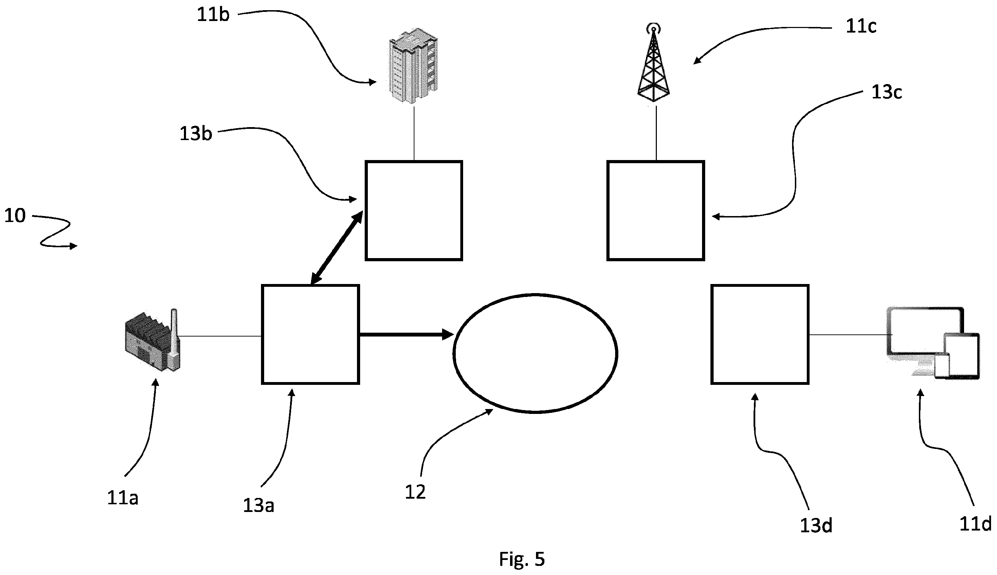

Comme représenté sur la figure 5, lorsqu'un client 11b achète un lot d'objets ou un objet, une transaction doit être réalisée par le fabricant 11a pour donner accès au client 11b à la clé de l'objet ou des objets concernés par l'achat. De même lorsqu'un contrat de partage est fait entre deux clients 11b, un accès peut être accordé aux deux clients 11b.

Le fabricant 11a récupère dans la chaine de blocs du gestionnaire de secret 12 les identités, et notamment la clé publique, de chaque nœud qui doit obtenir le droit d'accès et de contrôle de l'objet.

Le fabricant 11a met alors à jour les droits d'accès et de contrôle associés.

Ainsi, le client 11b est également en mesure de retrouver la clé de l'objet, il a également les droits de modifier les droits d'accès associés.

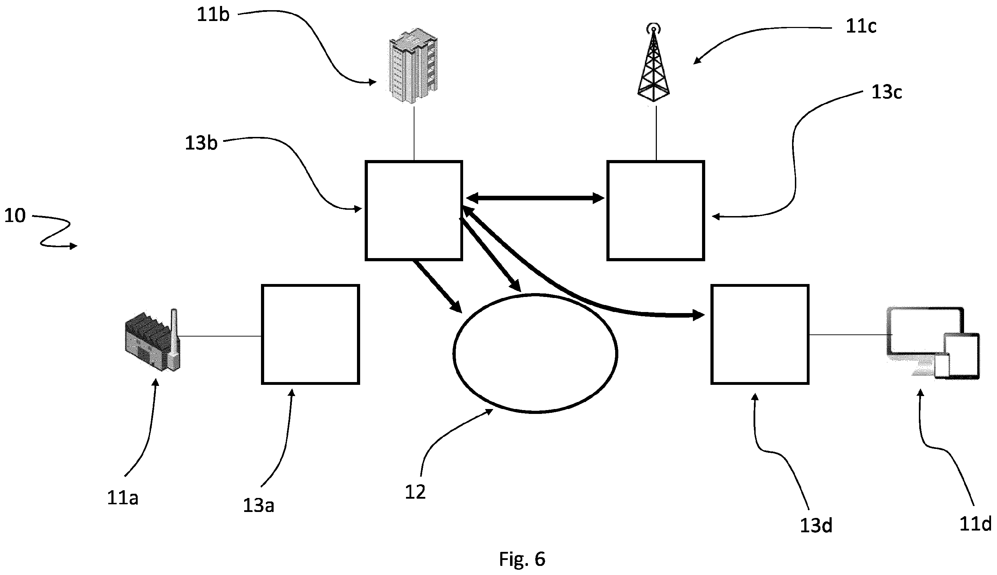

Comme représenté sur la figure 6, l'enregistrement d'un objet est effectué par le client 11b, par l'intermédiaire du nœud 13b associé au client 11b qui a acheté l'objet. Cela permet ainsi de donner l'autorisation d'accès aux clés de session de l'objet. Les clés de session sont des clés dérivées de la clé de l'objet qui permettent d'échanger de manière chiffrée et donc sécurisée des informations entre un objet et un pair, c'est-à-dire un opérateur 11c et/ou un serveur d'applications 11d.

Le client 11b récupère dans la chaine de blocs du gestionnaire de secrets les identités, notamment la clé publique de chaque pair qui doit obtenir le droit d'accès de l'objet.

Le client 11b met alors à jour les droits d'accès associés.

Ainsi, le client 11b a donné le droit d'accès à l'objet à des opérateurs 11c et/ou des serveurs d'applications 11d. Ces derniers peuvent alors demander des clés de session pour l'objet afin de pouvoir communiquer avec lui.

Lorsqu'un opérateur 11c et/ou un serveur d'applications 11d veut échanger avec un objet de manière sécurisée, il doit utiliser la clé de session utilisée par l'objet. Pour communiquer avec l'objet, il aura ainsi la possibilité de faire calculer une clé de session, résultat de la dérivation de la clé de l'objet par un secret partagé et précédemment échangé entre un objet et la plateforme 10, ou bien de faire recalculer une clé de session, précédemment calculée et stockée de manière sécurisée dans la plateforme 10.

Cette clé de session permet ainsi de chiffrer l'ensemble des communications entre le pair et l'objet.

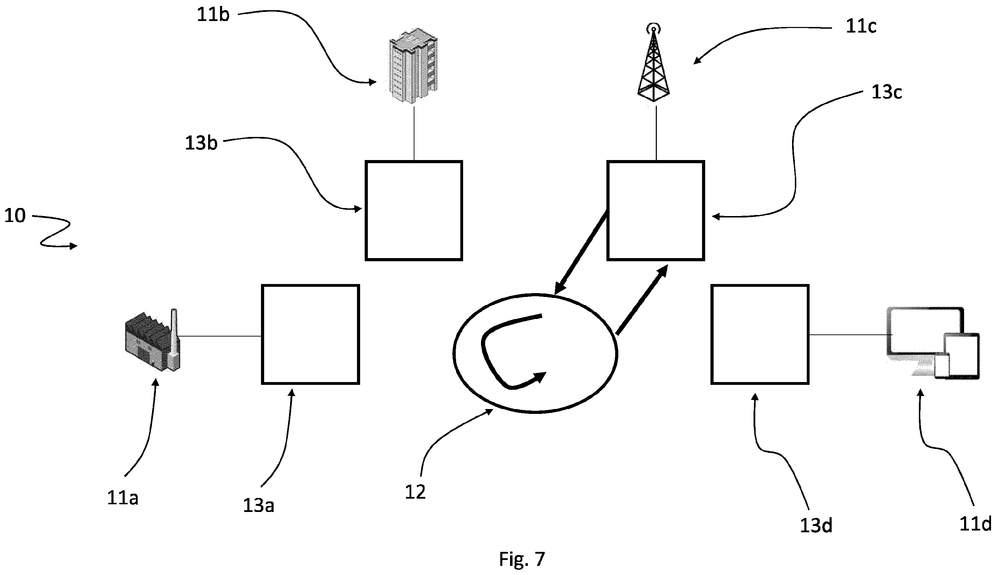

Comme représenté sur la figure 7, l'opérateur 11c demande alors la clé de session associée à un objet afin de pouvoir chiffrer ou déchiffrer les communications avec cet objet. Cette demande peut se faire via n'importe quel nœud 13. Le nœud 13 vérifie l'identité de l'acteur 11c, et vérifie via la chaine de blocs du gestionnaire de secrets 12 qu'il a bien les droits d'accès à l'objet.

Si les droits sont corrects, le nœud 13 vérifie si une clé de session associée existe déjà pour éviter de la générer de nouveau. On peut réaliser un stockage de cette clé de session reprenant les mêmes mécanismes que ceux de la clé de l'objet.

Le nœud 13 envoie ainsi la clé de session à utiliser à l'acteur 11c en la chiffrant avec la clé publique de l'acteur 11c.

L'invention n'est pas limitée aux modes de réalisation présentés et d'autres modes de réalisation apparaîtront clairement à l'homme du métier. Il est notamment possible d'appliquer l'invention pour toutes les applications qui nécessitent une gestion du partage automatisé et sécurisé d'informations, résilient aux pannes et adapté pour répondre à une haute disponibilité.

## Revendications

1. Plateforme (10) de gestion de secrets (15) entre au moins deux acteurs (11) ayant chacun une paire de clés propre, comportant un gestionnaire de secrets (12) comprenant :
- un registre (14) de chaîne de blocs partagé entre au moins deux nœuds (13), et
- un contrat intelligent (19) les nœuds ayant chacun une paire de clés propre, chaque nœud (13) gérant la consultation du gestionnaire de secrets (12) par un des acteurs (11),
**caractérisée en ce que** le contrat intelligent est adapté à réaliser une dérivation (21) de clé de sorte à créer une clé de session à partir d'un secret contenu dans le gestionnaire de secrets (12).

2. Plateforme (10) de gestion de secrets (15) selon la revendication 1, dans laquelle la paire de clés des acteurs (11) et des nœuds (13) ont chacune une partie publique stockée dans le registre partagé (14).

3. Plateforme (10) de gestion de secrets (15) selon l'une quelconque des revendications précédentes, dans laquelle le gestionnaire de secrets (12) comprend un système de permission (16).

4. Plateforme (10) de gestion de secrets (15) selon l'une quelconque des revendications précédentes, dans laquelle le gestionnaire de secrets (12) comprend un système de contrôle d'accès (17).

5. Plateforme (10) de gestion de secrets (15) selon l'une quelconque des revendications précédentes, dans laquelle le gestionnaire de secrets (12) comprend un mécanisme d'anti-rejeu (18).

6. Plateforme (10) de gestion de secrets (15) selon l'une quelconque des revendications précédentes, dans laquelle le gestionnaire de secrets (12) comprend un gestionnaire de clé (20').

7. Plateforme (10) de gestion de secrets (15) selon l'une quelconque des revendications précédentes, dans laquelle le contrat intelligent (19) comprend un générateur de clé (20).

8. Plateforme (10) de gestion de secrets (15) selon l'une quelconque des revendications précédentes, dans laquelle au moins un des deux acteurs (11) gère au moins un secret (15) ainsi que des droits associés à ce secret (15).

9. Plateforme (10) de gestion de secrets (15) selon l'une quelconque des revendications précédentes, dans laquelle chaque noeud (13) est adapté pour utiliser au moins un secret (15) afin de fournir à un des acteurs (11) un résultat d'au moins une opération impliquant le secret (15) en fonction des droits associés à ce secret (15).

10. Plateforme (10) de gestion de secrets (15) selon l'une quelconque des revendications précédentes, dans laquelle chaque noeud (13) a accès à un module (22) cryptographique physique.

11. Procédé de gestion d'un secret (15) entre au moins des premier et second acteurs (11), réalisé au moyen d'une plateforme (10) de gestion de secrets (15) selon l'une quelconque des revendications 1à 10, le premier acteur (11) étant propriétaire du secret (15) et chaque acteur (11) ayant des droits attachés au secret (15), le procédé comprenant les étapes suivantes :
- accès du second acteur (11) au gestionnaire de secrets (12) ;
- demande du second acteur (11) de réaliser une opération sur le secret, l'opération sur le secret étant une opération de chiffrement du secret ;
- réalisation d'une dérivation de clé de session par le contrat intelligent (19) à partir du secret ; et
- transmission de la clé de session au second acteur (11) par le gestionnaire de secret (12).

12. Procédé de gestion d'un secret (15) selon la revendication précédente, comprenant en outre au moins une des étapes suivantes :
- vérification par le contrat intelligent (19) que le second acteur (11) possède les droits nécessaires pour réaliser l'opération sur le secret (15) ;
- récupération du secret (15) par le contrat intelligent (19).

13. Procédé de gestion d'un secret (15) selon l'une des revendications 11 à 12, comprenant une étape de chiffrement de la clé de session, avant l'étape de transmission au second acteur (11).

14. Procédé de gestion d'un secret (15) selon l'une quelconque des revendications 11 à 13, comprenant en outre une étape d'authentification du second acteur (11).

15. Procédé de gestion d'un secret (15) selon l'une quelconque des revendications 11 à 14, dans lequel les droits attachés au secret (15) sont définis par l'acteur (11) propriétaire du secret (15).

## Patentansprüche

1. Plattform (10) zum Verwalten von Geheimnissen (15) zwischen mindestens zwei Akteuren (11), die jeweils ein eigenes Schlüsselpaar besitzen, die einen Geheimnisverwalter (12) aufweist, umfassend:
- ein Blockchain-Register (14), das zwischen mindestens zwei Knoten (13) gemeinsam genutzt wird, und
- einen intelligenten Vertrag (19)
wobei die Knoten jeweils ein eigenes Schlüsselpaar besitzen, wobei jeder Knoten (13) die Abfrage des Geheimnisverwalters (12) durch einen der Akteure (11) verwaltet,
**dadurch gekennzeichnet, dass** der intelligente Vertrag angepasst ist, um eine Ableitung (21) von Schlüsseln durchzuführen, um einen Sitzungsschlüssel aus einem Geheimnis zu erstellen, das in dem Geheimnisverwalter (12) enthalten ist.

2. Plattform (10) zum Verwalten von Geheimnissen (15) nach Anspruch 1, wobei das Schlüsselpaar der Akteure (11) und der Knoten (13) jeweils einen öffentlichen Teil aufweist, der in dem gemeinsam genutzten Register (14) gespeichert ist.

3. Plattform (10) zum Verwalten von Geheimnissen (15) nach einem der vorstehenden Ansprüche, wobei der Geheimnisverwalter (12) ein Berechtigungssystem (16) umfasst.

4. Plattform (10) zum Verwalten von Geheimnissen (15) nach einem der vorstehenden Ansprüche, wobei der Geheimnisverwalter (12) ein Zugriffssteuerungssystem (17) umfasst.

5. Plattform (10) zum Verwalten von Geheimnissen (15) nach einem der vorstehenden Ansprüche, wobei der Geheimnisverwalter (12) einen Wiederholungsschutzmechanismus (18) umfasst.

6. Plattform (10) zum Verwalten von Geheimnissen (15) nach einem der vorstehenden Ansprüche, wobei der Geheimnisverwalter (12) einen Schlüsselverwalter (20') umfasst.

7. Plattform (10) zum Verwalten von Geheimnissen (15) nach einem der vorstehenden Ansprüche, wobei der intelligente Vertrag (19) einen Schlüsselgenerator (20) umfasst.

8. Plattform (10) zum Verwalten von Geheimnissen (15) nach einem der vorstehenden Ansprüche, wobei mindestens einer der zwei Akteure (11) mindestens ein Geheimnis (15) sowie mit diesem Geheimnis (15) verknüpfte Rechte verwaltet.

9. Plattform (10) zum Verwalten von Geheimnissen (15) nach einem der vorstehenden Ansprüche, wobei jeder Knoten (13) zum Verwenden mindestens eines Geheimnisses (15) angepasst ist, um einem der Akteure (11) ein Ergebnis mindestens einer Operation, die das Geheimnis (15) beinhaltet, in Abhängigkeit von den mit diesem Geheimnis (15) verknüpften Rechten bereitzustellen.

10. Plattform (10) zum Verwalten von Geheimnissen (15) nach einem der vorstehenden Ansprüche, wobei jeder Knoten (13) Zugriff zu einem physischen kryptographischen Modul (22) besitzt.

11. Verfahren zum Verwalten eines Geheimnisses (15) zwischen mindestens einem ersten und einem zweiten Akteur (11), das mittels einer Plattform (10) zum Verwalten von Geheimnissen (15) nach einem der Ansprüche 1 bis 10 durchgeführt wird, wobei der erste Akteur (11) Eigentümer des Geheimnisses (15) ist und jeder Akteur (11) an das Geheimnis (15) gebundene Rechte besitzt, das Verfahren umfassend die folgenden Schritte:
- Zugreifen des zweiten Akteurs (11) auf den Geheimnisverwalter (12);
- Anfordern des zweiten Akteurs (11), eine Operation an dem Geheimnis durchzuführen, wobei die Operation an dem Geheimnis eine Verschlüsselungsoperation des Geheimnisses ist;
- Durchführen einer Ableitung des Sitzungsschlüssels durch den intelligenten Vertrag (19) aus dem Geheimnis; und
- Übertragen des Sitzungsschlüssels an den zweiten Akteur (11) durch den Geheimnisverwalter (12).

12. Verfahren zum Verwalten eines Geheimnisses (15) nach dem vorstehenden Anspruch, ferner umfassend mindestens einen der folgenden Schritte:
- Überprüfen durch den intelligenten Vertrag (19), dass der zweite Akteur (11) über die erforderlichen Rechte zum Durchführen der Operation an dem Geheimnis (15) verfügt;
- Wiedererlangen des Geheimnisses (15) durch den intelligenten Vertrag (19).

13. Verfahren zum Verwalten eines Geheimnisses (15) nach einem der Ansprüche 11 bis 12, umfassend einen Schritt des Verschlüsselns des Sitzungsschlüssels vor dem Schritt des Übertragens an den zweiten Akteur (11).

14. Verfahren zum Verwalten eines Geheimnisses (15) nach einem der Ansprüche 11 bis 13, ferner umfassend einen Schritt zum Authentifizieren des zweiten Akteurs (11).

15. Verfahren zum Verwalten eines Geheimnisses (15) nach einem der Ansprüche 11 bis 14, wobei die an das Geheimnis (15) gebundenen Rechte durch den Akteur (11), der Eigentümer des Geheimnisses (15) ist, definiert werden.

## Claims

1. Platform (10) for managing secrets (15) between at least two parties (11) each having their own key pair, the platform including a secrets manager (12) comprising:
- a blockchain registry (14) shared between at least two nodes (13), and
- a smart contract (19)
the nodes each having their own key pair, each node (13) managing the consultation of the secrets manager (12) by one of the parties (11),
**characterized in that** the smart contract is suitable for performing a key derivation (21) so as to create a session key from a secret contained in the secrets manager (12).

2. Platform (10) for managing secrets (15) according to claim 1, wherein the key pair of the parties (11) and of the nodes (13) each have a public part stored in the shared registry (14).

3. Platform (10) for managing secrets (15) according to either one of the preceding claims, wherein the secrets manager (12) comprises a permission system (16).

4. Platform (10) for managing secrets (15) according to any one of the preceding claims, wherein the secrets manager (12) comprises an access control system (17).

5. Platform (10) for managing secrets (15) according to any one of the preceding claims, wherein the secrets manager (12) comprises an anti-replay mechanism (18).

6. Platform (10) for managing secrets (15) according to any one of the preceding claims, wherein the secrets manager (12) comprises a key manager (20').

7. Platform (10) for managing secrets (15) according to any one of the preceding claims, wherein the smart contract (19) comprises a key generator (20).

8. Platform (10) for managing secrets (15) according to any one of the preceding claims, wherein at least one of the two parties (11) manages at least one secret (15) as well as rights associated with this secret (15).

9. Platform (10) for managing secrets (15) according to any one of the preceding claims, wherein each node (13) is adapted to use at least one secret (15) in order to provide one of the parties (11) with a result of at least one operation involving the secret (15) on the basis of the rights associated with this secret (15).

10. Platform (10) for managing secrets (15) according to any one of the preceding claims, wherein each node (13) has access to a physical cryptographic module (22).

11. Method for managing a secret (15) between at least a first and a second party (11), performed by means of a platform (10) for managing secrets (15) according to any one of claims 1 to 10, the first party (11) being the owner of the secret (15) and each party (11) having rights attached to the secret (15), the method comprising the following steps:
- the second party (11) accessing the secrets manager (12);
- the second party (11) requesting that an operation be performed on the secret, the operation on the secret being an operation for encrypting the secret;
- the smart contract (19) performing a session key derivation from the secret; and
- the secrets manager (12) transmitting the session key to the second party (11).

12. Method for managing a secret (15) according to the preceding claim, further comprising at least one of the following steps:
- the smart contract (19) verifying that the second party (11) possesses the necessary rights to perform the operation on the secret (15);
- the smart contract (19) recovering the secret (15).

13. Method for managing a secret (15) according to one of claims 11 to 12, comprising a step of encrypting the session key prior to the step of transmitting it to the second party (11).

14. Method for managing a secret (15) according to any one of claims 11 to 13, further comprising a step of authenticating the second party (11).

15. Method for managing a secret (15) according to any one of claims 11 to 14, wherein the rights attached to the secret (15) are defined by the party (11) that owns the secret (15).
